# EUROPEAN PATENT APPLICATION

(11) **EP 4 738 660 A1**
(43) Date of publication of application: **06.05.2026**
(21) Application number: 24209498.5
(22) Date of filing: 29.10.2024
(51) Int. Cl.: H02K 1/2796, H02K 21/24, H02K 21/38, H02K 41/03, H02K 1/24, H02K 1/2795, H02K 1/34, H02K 1/27, H02K 19/10, H02K 49/10, H02K 21/14, H02K 21/22, H02K 21/40, H02K 21/42, H02K 21/44, H02K 7/08, H02K 15/022, H02K 15/035, H02K 1/276

(54) **ELECTRICAL MACHINE WITH BRIDGE-FRAMED STRUCTURES**

(71) Applicant: Hagnesia AB, 438 54 Hindås (SE)
(72) Inventor: Hagnestål, Anders, 438 54 Hindås (SE); Åström, Johan, 437 91 Lindome (SE); Keijser, Mårten, 811 62 Sandviken (SE)
(74) Representative: AWA Sweden AB

(57) **Abstract**

An electrical machine operating by switching of magnetic flux comprises a stationary member (10) and a movable member (11), arranged movable with respect of each other along a predetermined motion path (P). The stationary member and the movable member have each at least one side air-gap surface (14). The movable member and/or the stationary member comprises stacks (21) of sheet portions (20) of highly magnetically permeable material (40). Each of the sheet portions of highly magnetically permeable material has a main sheet extension with a normal (N) that is parallel to respective the side air-gap surface and is transverse to a direction of the predetermined motion path. The stacks of sheet portions of highly magnetically permeable material together form cavities extending transverse to the main sheet extension. Thereby a bridging section (23) of said highly magnetically permeable material is formed.

## Description

### TECHNICAL FIELD

The present technology relates in general to electrical machines, and in particular to electrical machines presenting varying magnetic permeability or permanent magnets along an air-gap surface, and manufacturing methods therefore.

### BACKGROUND

The concept of electrical machines is well known and the first types of electrical machines such as the induction machine and the synchronous machine that were invented in the late 19:th century are still very important in the industry today. Electric machines generally comprise one movable part, typically but not restricted to a rotor or a translator, and a second part, typically but not restricted to a stator. These parts are separated by an airgap, which separates the movable part and the second part. At least one of the parts, typically a stator, also has an electric winding which can carry an electric current.

Characterizing for electric machines is that they have low force or torque densities compared to mechanical systems such as gear boxes, hydraulic systems and pneumatic systems, but has high power densities since they can operate at high speed. A power density of 1 kW/kg is a representative number for an electric motor.

Characterizing for most electrical machines is also that the resistive power losses, which often constitute the majority of the losses in the electric machine, are independent on the airgap speed v if the eddy currents in the winding are neglected. However, counted in percent of the total power, the resistive power losses become proportional to 1/v since the total power is proportional to v. Thereby, general electric machines typically have high efficiencies at high speeds at the airgap in the range 10-100 m/s, where efficiencies in the range of 90-98% are common. At low speeds at the airgap, e.g. below 5 m/s, electrical machines typically have lower efficiencies.

Also, the resistive losses typically create a thermal problem in the electric machine, and limit the torque and force density as well as the power density for operations longer than a few seconds.

To get around the low speed efficiency problem and the low force density problem, a number of different machine types belonging to the family of machines known as variable reluctance machines (VRM) and especially variable reluctance permanent magnet machines (VRPM) has been proposed and developed. These machine types have different and overlapping designations, for example the Vernier machine (VM), the Vernier hybrid machine (VHM), modulated pole machines (MPM) and different variants of transverse flux machines (TFM). Generally, they implement a geometrical effect known as magnetic gearing, which lowers the winding resistance grossly by making the winding shorter and thicker. This is accomplished by arranging the geometry so that the flux from several adjacent poles goes in the same direction and so that the flux from these poles switches direction when the movable part, i.e. translator or rotor, is moved one pole length.

These machines also typically develop a higher shear stress than other machines, where shear stress is defined as the useful shear force per unit airgap area. They, however, do not in general increase the amount of airgap area packed in per unit volume much compared to standard machines, so although the force density of these machines is increased, it is only moderately. A well-known problem with these machine types is that the leakage magnetic flux becomes large, and that the power factor becomes low at full load. Thereby, they cannot both have a high power factor and a very high shear stress. Although they have been proposed for e.g. wind power, they have not reached a wide-spread market penetration due to these drawbacks.

A specialized type of VRM is presented in the published US patent US 11,728,717 B2 and a specialized type of VRPM machine which is now called the poloidal or tangential flux machine (PTF) machine is presented in the published US patent applications US 2023/0353025 A1, US 2023/0268815 A1 and US 2023/0275481 A1. These machine types have the advantage that they do pack in considerable airgap area per unit volume and thereby accomplishes a very high force or torque density. However, they are very difficult to build, and both the specialized type of VRM and the PTF are double-sided in design with airgaps on both sides of thin sections and have many small blocks of permeable material interleaved with other materials along the movement direction. For the PTF, the preferred double-sided flux-concentrating structure that contain the permanent magnets is built up from interleaved sections of permanent magnets and permeable material, typically electrical steel, along the movement direction. Such a construction does not become robust and mechanically reliable. For the specialized VRM, it is also difficult to find a robust and reliable construction. The machine types also have small airgaps and require precise manufacturing and assembly tolerances in the order of +- 0.01 mm or less, which is very difficult to accomplish by assembling a large number of parts and forming a long tolerance chain.

A common way to mount permanent magnets in prior art permanent magnet synchronous electrical machines is to make slots in the electrical steel in the rotor, and insert the permanent magnets in the slots. This typically lowers the electromagnetic performance of the machines, but has the advantages that it:
1. facilitates the assembly of the machine,
2. provides a metal frame around the magnet that holds it in place in a robust way and helps to handle the "centrifugal" forces that arise from the rotation of the rotor and thus allows for higher rotational speeds, and
3. it could lower the eddy currents in the permanent magnets since the rotor airgap surface is made up of electrical steel and the permanent magnets are hidden further into the rotor.

A problem with prior art electrical machines is that in low speed applications and in applications where high force or torque densities are required, the current solutions cannot both reach very high torque or force densities, and provide a robust construction of the interior electromagnetically active parts.

### SUMMARY

A general object of the presented technology is therefore to provide a solution for electrical machines operating by switching of magnetic flux.

The electrical machines may be of a specialized VRM, switched reluctance or PFM type, and the interior electromagnetically active parts achieve an improved structural strength by the presented technology. It is furthermore more straight forward to assemble such machines by using the present technology and the assembling can be performed with higher precision.

The above object is achieved by methods and devices according to the independent claims. Preferred embodiments are defined in dependent claims.

In general words, in a first aspect, an electrical machine is presented, being a machine operating by switching of magnetic flux. The electrical machine comprises a stationary member and a movable member. The stationary member has at least one side air-gap surface. The stationary member has at least one stationary member section. The movable member has at least one side air-gap surface. The movable member has at least one movable member section. The movable member is movable relative to the stationary member along a predetermined motion path. The predetermined motion path can be rotational or linear. The predetermined motion path is parallel to the side air-gap surfaces of stationary member and movable member. The side air-gap surface of the movable member and the side air-gap surface of the stationary member are separated by an air-gap. At least one of the movable member and the stationary member comprises stacks of sheet portions of highly magnetically permeable material. Each of the sheet portions of highly magnetically permeable material has a main sheet extension with a normal that is parallel to respective the side air-gap surface and is transverse to a direction of the predetermined motion path. Each of the sheet portions have cut-out areas, wherein the cut-out areas in the stacks of sheet portions of highly magnetically permeable material together form cavities extending transverse to the main sheet extension. Thereby a bridging section of the highly magnetically permeable material is formed passing said cavities in the direction of the predetermined motion path.

In a second aspect, a method for manufacturing at least one of a movable member and a stationary member of an electrical machine comprises providing of a sheet of a highly magnetically permeable material. Cut-out areas are created in the sheet of the highly magnetically permeable material. The sheet of the highly magnetically permeable material is separated into sheet portions. The sheet portions are stacked in a direction perpendicular to a main sheet extension of respective sheet portions, thereby forming a stack of sheet portions. The stacking comprises adapting a relative lateral position of the sheet portions for aligning the cut-out areas of the respective sheet portions for forming cavities extending transverse to the main sheet extension. The sheet portions are adhered to each other. Thereby, the movable member and/or the stationary member of an electrical machine is formed. Edges of the sheet portions together form a side air-gap surface that is parallel to a normal of the main sheet extension. The stack of sheets of highly magnetically permeable material forms a bridging section of the highly magnetically permeable material passing the cavities in a direction of a predetermined motion path.

In a third aspect, a method for manufacturing an electrical machine comprises providing of a movable member and providing of a stationary member. At least one of the providing of a movable member and the providing of a stationary member is performed according to the second aspect. The movable member is mounted movable relative to the stationary member along a predetermined motion path. The predetermined motion path is rotational or linear. The predetermined motion path is parallel to the side air-gap surfaces of stationary member and movable member. The side air-gap surface of the movable member and the side air-gap surface of said stationary member are separated by an air-gap.

One advantage with the proposed technology is that provision of permanent magnets or non-magnetic material close to an air-gap surface is tremendously facilitated. Other advantages will be appreciated when reading the detailed description.

### BRIEF DESCRIPTION OF THE DRAWINGS

The invention, together with further objects and advantages thereof, may best be understood by making reference to the following description taken together with the accompanying drawings, in which:
FIG. 1A is a schematic illustration of an embodiment of an electrical machine operating by switching of magnetic flux;
FIG. 1B illustrates schematically an embodiment of an electrical machine according to the present technology;
FIG. 2A illustrates schematically an embodiment of a stationary/ movable member;
FIG. 2B illustrates schematically the assembling of a sheet portion;
FIG. 3 illustrates a part of an embodiment of a stationary/movable member of a modulated pole machine;
FIG. 4A-B are schematical illustrations of embodiments of electrical machines having a plurality of stationary member sections and a plurality of moving member sections;
FIG. 5A illustrates a part of an embodiment of a stationary/movable member of a switched reluctance machine;
FIG. 5B illustrates a sheet portion for assembling an embodiment of a switched reluctance machine;
FIG. 6 is a schematical illustration of an embodiments of an electrical switched reluctance machine having a plurality of stationary member sections and a plurality of moving member sections;
FIG. 7 is schematical illustration of a stationary/movable member having additional side structures;
FIG. 8 illustrates one embodiment of a manufacturing approach of stationary movable members of an electrical machine;
FIG. 9 is a flow diagram is a flow diagram of steps of an embodiment of a method for manufacturing a movable member and/or a stationary member of an electrical machine; and
FIG. 10 is a flow diagram of steps of an embodiment of a method for manufacturing an electrical machine.

### DETAILED DESCRIPTION

Throughout the drawings, the same reference numbers are used for similar or corresponding elements.

For a better understanding of the proposed technology, it may be useful to begin with a brief overview of magnetic flux considerations in an electrical machine operating by switching of magnetic flux.

In the text that follows, a magnetic pole is an important concept. For machines that are excited by either permanent magnets or by a winding on the movable part, the mover or rotor, a pole is a magnetically excited part that is characterized by having the same magnetic polarity everywhere. Adjacent to this pole, there is another pole with the opposite polarity, and two adjacent poles form a pole pair. The magnetic flux from this pole pair normally forms a loop within the pole pair and in part also through adjacent poles, so that the flux through each pole returns in the two poles of opposite polarity that are adjacent to that pole. Typically, but not always, the poles are located on the mover or rotor.

For reluctance machines, permanent magnets are not used. Poles are instead defined by the saliency, i.e. that the magnetic reluctance experienced by the flux generated from the stator windings varies with position of the rotor or mover. The function of the poles is also different, since the poles are not a source of magnetic flux density but instead a part of a repeating geometrical pattern of permeable material. In synchronous reluctance machines, either salient poles formed by rotor or mover permeable teeth or for modern machines long-thin hole patterns through the permeable material in the mover or rotor creates a low reluctance loop between two adjacent locations of high saliency and correspondingly a high reluctance loop from the positions with non-saliency. Note that a highly permeable material often used is electrical steel. For the synchronous reluctance machine, a salient position is here defined as a pole, and two adjacent such poles with a location having non-saliency in between them forms a pole pair. In switched reluctance machines, the difference in magnetic reluctance is formed by a varying magnetic reluctance both on the mover or rotor and the stator. This varying reluctance is typically formed by having permeable teeth in the mover or rotor and the stator. The current in the stator then forms a magnetic field between the mover or rotor and the stator. At certain positions, the shear force on the mover or rotor will be in one direction, at other positions it will be in the other direction, regardless of the direction of the current, and at certain positions it will be zero. This force arises since the mover or rotor teeth strive to align with the stator teeth when excited by a magnetic field. To operate such a machine, the current in the stator is switched on and off so that one obtains a force in one direction only. Typically, one has for one phase a current in the quadrants 1 and 3 or the quadrants 2 and 4 of an electrical period, and combine a multitude of phases to get a working machine with torque or force in the right direction in all positions. A pole is then like in the synchronous reluctance machine defined as a position on the rotor where the saliency is high, i.e. where there is a tooth of a highly permeable material.

An electrical machine that operates by switching of magnetic flux operates differently than most electrical machines. The key difference is that in machines that do not operate by switching of magnetic flux, the flux loops are small and local, circling around in adjacent magnetic poles. If the winding is concentrated, each winding loop only encloses magnetic flux from approximately one pole. If the winding is distributed, the winding loops typically enclose magnetic flux from several adjacent poles, but the net magnetic flux through that winding is not larger than the flux from one pole during normal operation, since adjacent poles are of opposite polarity. For machines that operate by switching of magnetic flux, the winding encloses the magnetic flux from several adjacent poles with a simple loop, and the net flux through that winding loop is larger than the magnetic flux from one pole, typically many times larger. Machines that operate by switching of magnetic flux thereby includes machines that in the literature is called transverse flux machines, vernier hybrids, modulated pole machines, flux-switching machines, variable reluctance permanent magnet machines and some types of switched reluctance machines. To be more precise, a machine that operates by switching of magnetic flux comprises a winding loop that encloses magnetic flux from at least three adjacent poles and has a net magnetic flux from these said at least three adjacent poles through said winding loop that is larger than the magnetic flux from one pole, preferably having a winding loop that encloses magnetic flux from at least six adjacent poles and has a net magnetic flux from these said at least six adjacent poles through said winding loop that is larger than the magnetic flux from one pole and most preferably having a winding loop that encloses magnetic flux from at least ten adjacent poles and has a net magnetic flux from these said at least ten adjacent poles through said winding loop that is larger than the magnetic flux from one pole.

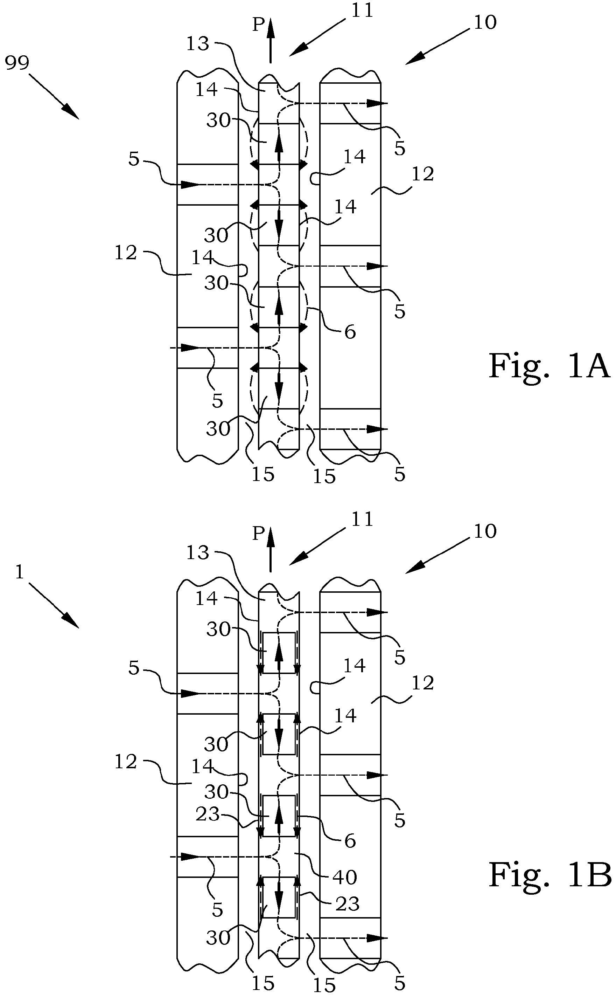

In Figure 1A, is a schematic illustration of an embodiment of an electrical machine 99 operating by switching of magnetic flux according to prior art. The actual type of machine is just an illustrative example, and the present technology can by advantage be used in many other types of electrical machines operating by switching of magnetic flux. A stationary member 10 has two stationary member sections 12 provided on opposite sides of a movable member section 13 of a movable member 11. The stationary member sections 12 are separated by an air-gap 15 from the movable member section 13. The air-gap 15 is defined by side air-gap surfaces 14 of the stationary member sections 12 and the movable member section 13. The movable member section 13 presents a number of permanent magnets 30 separated by volumes of highly magnetically permeable material. A magnetic flux 5 having its origin from the permanent magnets 30 is conducted across the air-gaps 15 between the stationary member sections 12 and the movable member section 13. A small leak part 6 of the of the magnetic flux is passing the permanent magnets 30 through the air-gap 15, but the major part of the magnetic flux passes the side air-gap surfaces 14 of the stationary member sections 12 and the movable member section 13.

If the electrical machine operates as a generator, a motion of the movable member 11 along a predetermined motion path P causes changes in the magnetic flux 5, which can be picked up by electrical coils (not shown) inducing an electrical current therethrough.

If the electrical machine operates as a motor, varying currents through the coil will interact with the magnetic flux 5 causing a mechanical force on the movable member 11.

The basic principles for operating an electrical machine 99 operating by switching of magnetic flux are well-known by anyone skilled in the art and is therefore not described in any further detail.

In the movable member section 13, the permanent magnets 30 are provided inbetween portions of highly magnetically permeable material. There is typically a strive to use small air-gap distances, which calls for the side air-gap surfaces 14 to be smooth, to avoid damages during the relative motion. At the same time, the permanent magnets 30 are exposed for magnetic forces at the side air-gap surfaces 14. It is difficult and time-consuming to provide such configurations of elements with sufficient support in a direction across the air-gap as well as in the motion path direction. It is also cumbersome to obtain very smooth side air-gap surfaces 14 to allow for narrow air-gaps 15.

Fig. 1B illustrates schematically an embodiment of an electrical machine 1 operating by switching of magnetic flux according to the technology presented here. This particular machine is a modulated pole machine.

In other words, in one embodiment of an electrical machine operating by switching of magnetic flux, the electrical machine 1 comprises a stationary member 10 having at least one side air-gap surface 14. The stationary member 10 has at least one stationary member section 12. The electrical machine 1 further comprises a movable member 11 having at least one side air-gap surface 14. The movable member 11 has at least one movable member section 13. The movable member 11 is movable relative to the stationary member 10 along a predetermined motion path P parallel to the side air-gap surfaces 14 of stationary member 10 and movable member 11. The predetermined motion path P is rotational or linear. The side air-gap surface 14 of the movable member 11 and the side air-gap surface 14 of the stationary member are separated by an air-gap 15.

In this embodiment, the permanent magnets 30 are provided within apertures of a highly magnetically permeable material 40 forming the movable member section 13. The surface of the permanent magnets 30 are thus not present at the side air-gap surface 14 and therefore not in direct contact with the air-gap 15. Instead a narrow bridging section 23 of highly magnetically permeable material 40 remains, separating the permanent magnet 30 from the side air-gap surface 14.

The electrical steel that is between the permanent magnet and the air-gap or that forms a thin section between different thicker sections of electrical steel is henceforth called a bridge or bridging section.

This configuration has a disadvantage in that the leak part 6 of the of the magnetic flux is increased, taking advantage of the highly magnetically permeable material of the narrow bridging section 23. The magnitude of the magnetic flux 5 passing the air-gap 15 will therefore be reduced somewhat. However, the strong permanents magnets that are available today are nevertheless capable of providing necessary magnetic flux over the air-gap 15 anyway.

The advantages of placing the permanent magnets 30 in apertures largely compensate for the minor reduction on magnetic flux. There are forces on the permanent magnets 30 that are in the direction perpendicular to the air-gap 15, and in this direction, there is now a bridging section 23, forcing the magnets to remain in place. Furthermore, since the surface of the permanent magnets are not present directly at the air-gap, any irregularities from i.e. manufacturing tolerances or inaccurate assembly of the permanent magnet surfaces are of no importance for maintaining smooth side air-gap surfaces 14.

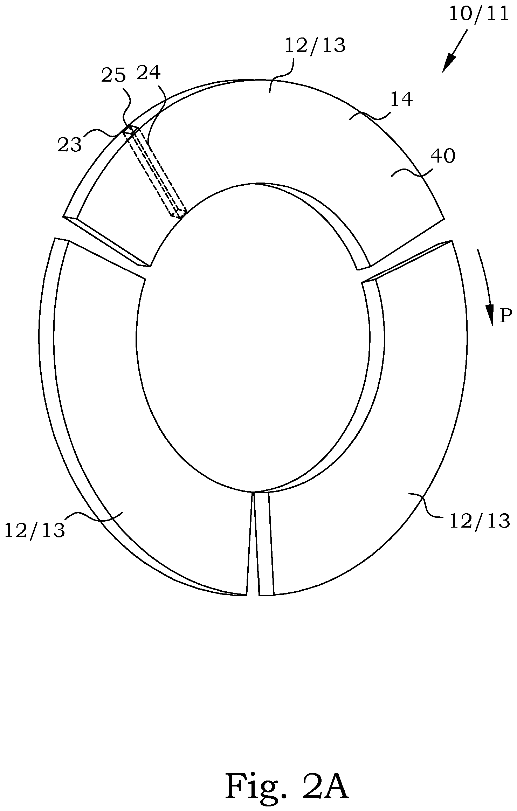

Figure 2A illustrates schematically an embodiment of a stationary member 10 or a movable member 11. The stationary/movable member 10/11 has here three stationary/movable member sections 12/13. In the highly magnetically permeable material 40, cavities 24 in the shape of apertures 25 are provided. The apertures 25 are separated from the side air-gap surface 14 by a narrow bridging section 23.

Such a structure is indeed possible to manufacture starting from one bulk piece of highly magnetically permeable material 40, possibly with structures counteracting eddy currents during operation. However, such an approach is difficult and costly.

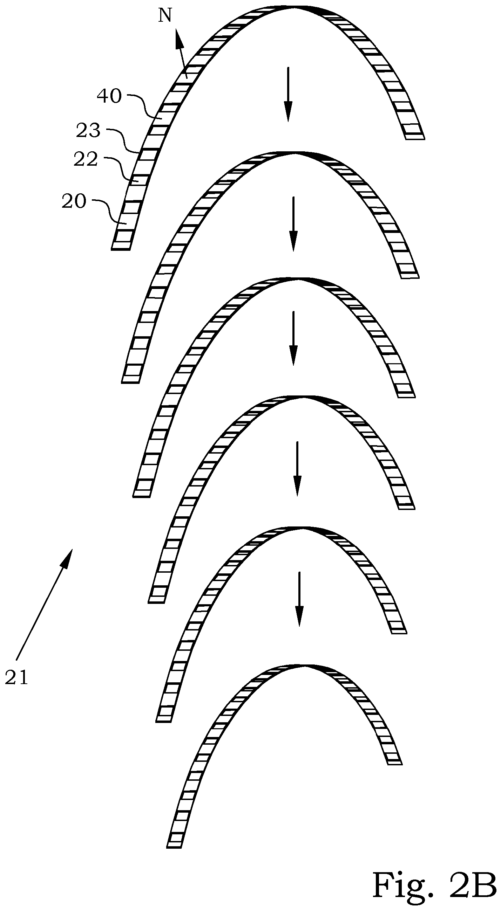

A preferred approach to achieve a structure such as illustrated in Fig. 2A is schematically illustrated in Figure 2B. Sheet portions 20 of highly magnetically permeable material 40 are provided in a stack 21. Each of the sheet portions 20 of highly magnetically permeable material 40 has a main sheet extension with a normal N that is parallel to the respective intended side air-gap surface and is transverse to a direction of the intended predetermined motion path. Each of the sheet portions 20 have cut-out areas 22. The cut-out areas in the stack 21 of sheet portions 20 of highly magnetically permeable material together form cavities 24 extending transverse to the main sheet extension, thereby forming the bridging section 23 of the highly magnetically permeable material 40 passing said cavities (24) in said direction of said predetermined motion path (P).

In this embodiment of Fig. 2A and Fig. 2B, the cavities 24 are apertures 25 extending transverse to the main sheet extension, The bridging section 23 of the highly magnetically permeable material 40 separates the aperture 25 and the respective side air-gap surface 14.

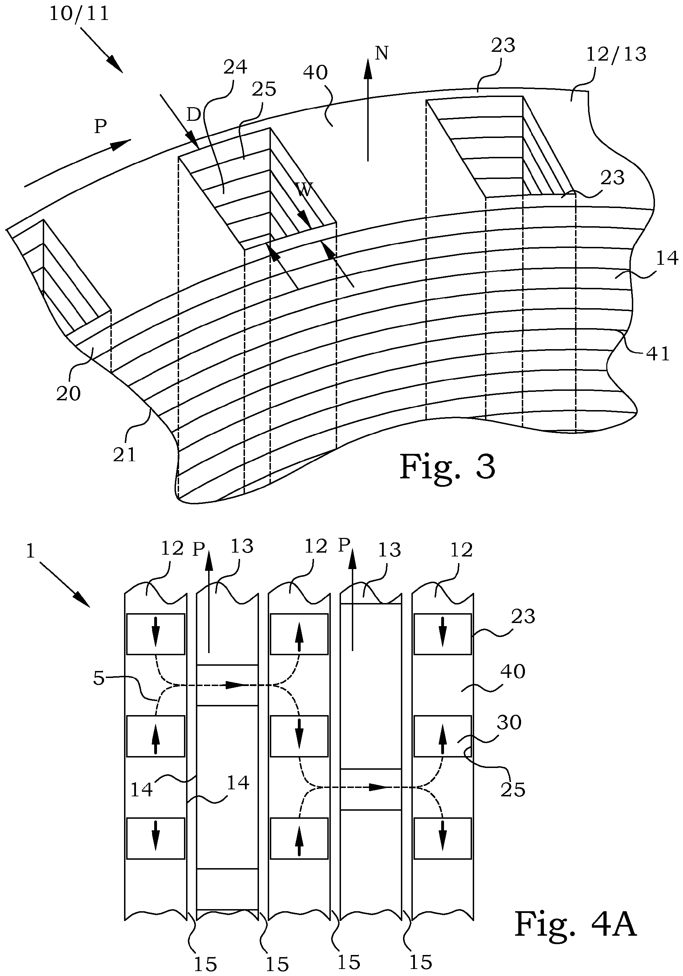

One embodiment of such a stationary/movable member 10/11 is also illustrated in Figure 3. The sheet portions 20 are attached together in the stack 21. Here it can easily be seen that the normal N of the main sheet extension of the sheet portions 20 is parallel to the side air-gap surface 14 and is transverse to a direction of the predetermined motion path P. If the stationary/movable member 10/11 is curved, the direction of the normal N will be different at different locations. The stacks 21 of sheet portions 20 of highly magnetically permeable material 40 together form cavities 24 in the shape of apertures 25 extending transverse to the main sheet extension. Thereby a bridging section 23 of the highly magnetically permeable material 40 is formed separating the aperture 25 and the side air-gap surface 14.

The highly magnetically permeable material is defined as materials having a relative magnetic permeability of more than 50 at a magnetic flux density of more than 0.2 Tesla.

Since the bridging section 23 has the disadvantage to support leak magnetic flux, it is preferred to keep the bridging section 23 narrow. Preferably, the bridging section 23 has a width W measured perpendicular to the side air-gap surface 14 that is less than 1/10, preferably less than 1/20, of an extension D of the apertures 25 perpendicular the side air-gap surface 14.

As will be discussed further below, the sheet portions are preferably provided with an adhesive material 41 before being stacked and attached to each other. Therefore, in the final stationary/movable member section 12/13, the sheet portions 20 of highly magnetically permeable material 40 in the stacks 21 are attached to each other by adhesive material 41.

As indicated earlier, the present technology can be applied to a stationary and/or movable member of an electrical machine. As also indicated, the stationary and/or movable member may comprise one or more stationary and/or movable member sections. These stationary and/or movable member sections may be divided in the direction of the predetermined motion path, such as e.g. in Figure 2A. The stationary and/or movable member sections may also, alternatively or in combination, be provided successively in the direction of the magnetic flux through the electrical machine. Such an embodiment is schematically illustrated in Figure 4A. The magnetic flux 5, of which only a part is illustrated, flows from the left to the right in the figure and passes a number of air-gaps 15 between stationary member sections 12 and movable member sections 13. The permanent magnets 30 are in this embodiment provided in the stationary member sections 12.

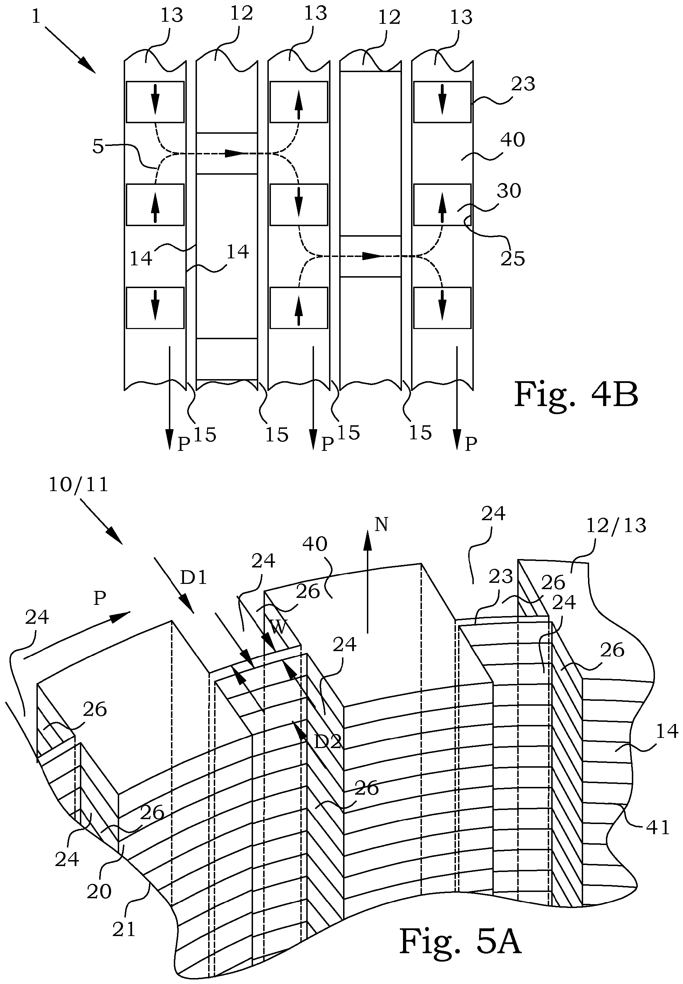

Figure 4B illustrates another embodiment, where the permanent magnets 30 instead are provided in the movable member sections 13.

Common for both these embodiments is that the movable member 11 has a plurality of movable member sections 13 and the stationary member 10 has a plurality of stationary member sections 12. The plurality of stationary member sections 12 and the plurality of movable member sections 13 are interleaved in a direction perpendicular to side air-gap surfaces 14 with a respective air-gap 15 between pairs of the side air-gap surfaces 14 of the movable member sections 13 and the side air-gap surfaces 14 of the stationary member sections 12.

In one embodiment, at least one of the plurality of stationary member sections 12 and the plurality of movable member sections 13 is a disc having air-gaps 15 on both sides. Both sides of the disc are facing a respective one of the plurality of movable member sections 13 and the plurality of stationary member sections 12, respectively.

In the embodiment described above, permanent magnets are inserted into the apertures. Such electrical machines are referred to as modulated pole machines. Preferably, the magnets are electrically insulated with respect to the stacks of sheet portions of the highly magnetically permeable material.

However, it is also possible to use the present ideas for achieving a varying magnetic permeability along the side air-gap surfaces 14. This can be achieved by giving different parts of the sections present different ability to conduct magnetic flux. Such arrangements are commonly used in switched reluctance machines.

A way to facilitate the construction of VRM machines is to form patterns in the electrical steel rotor. The difference of direct and quadrature inductances is maximized, and structural integrity is secured. The pattern in the rotor normally has thin electrical steel bridges, to provide sufficient structural strength but minimizing the electromagnetic performance deterioration from the bridge.

Figure 5A illustrates schematically a part of an embodiment of an electrical machine being a switched reluctance machine. In this embodiment, cavities 24 are provided. However, here the cavities 24 are open at one side, thereby forming recesses 26 in the side air-gap surface 14 extending transverse to the main sheet extension. The bridging section 23 thereby becomes positioned at a non-zero distance from said side air-gap surface 14. The recesses 26 may be unfilled as illustrated. In alternative embodiments, the recesses 26 may have non-magnetic material inserted therein.

Also here, it is preferably to have bridging sections 23 of a small width W in order to maximize the difference between the quadrature and direct inductance, i.e. limit any magnetic flux passing through the bridging sections 23. As above, the bridging section 23 has preferably a width W perpendicular to the respective side air-gap surface 14 that is less than 1/ 10, preferably less than 1/20, of an extension of the cavities perpendicular to the respective side air-gap surface 14. In this embodiment, the extension of the cavities perpendicular to the respective side air-gap surface 14 becomes the sum of the depths D1, D2 of the recesses 26.

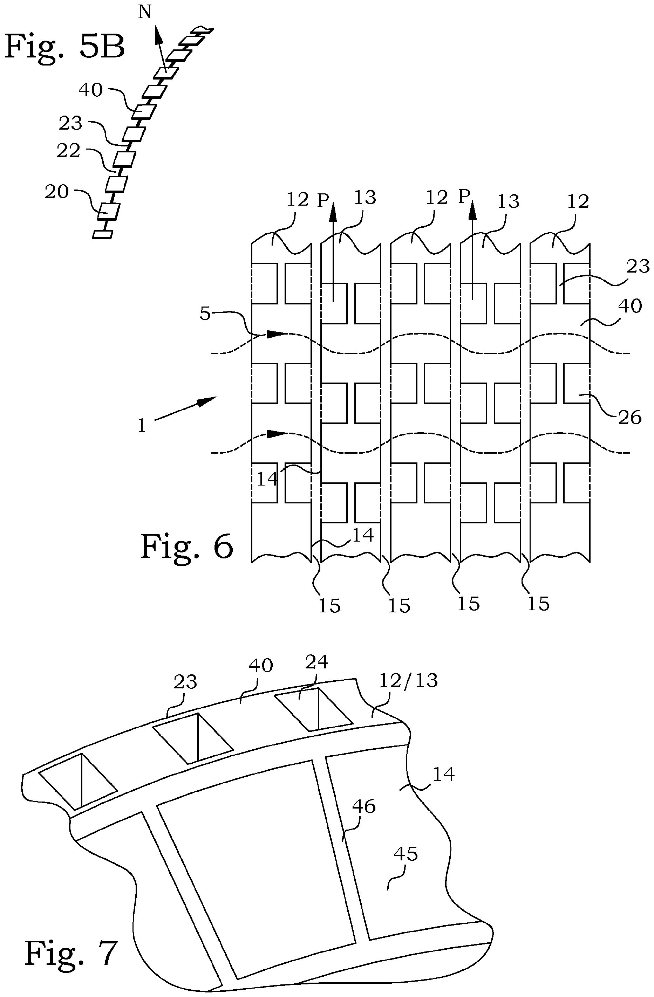

Figure 5B illustrates schematically an embodiment of a sheet portion 20 with cut-out areas 22 on both sides of the bridging section 23. By combining such sheet portions 20 in a stack, parts of a movable and/or stationary member can be created.

Figure 6 illustrates schematically a momentary situation of magnetic flux in a switched reluctance machine. The magnetic flux 5, of which only a part is illustrated, flows from the left to the right in the figure and passes a number of air-gaps 15 between stationary member sections 12 and movable member sections 13. At the air gaps, the parts presenting highly magnetically permeable material 40 throughout the entire width of the structure conducts the magnetic flow easier and forces are created to align the movable members 13 and the stationary members 12. This force can be used for motor applications.

Oppositely, if mechanical forces are applied which changes the conditions for the magnetic flux through the movable members 13 and the stationary members 12, such changes in flux may be used for creating electrical currents in a generator application.

The ability to obtain a geometrical structure in the shape of a cavity in a bulk component by stacking and adhering shaped sheets of material together may also be used for achieving other types of geometrical structures. In electrical machines operating by switching of magnetic flux, narrow structures are often required to use close to the air-gaps, which calls for reliable bearing arrangements. Some types of fluid bearings use recesses in the air-gap surfaces to define pressure volumes used in the bearing action. Such geometrical structures may also be manufactured in the same way and together with the cavities. Figure 7 illustrates schematically an embodiment of a stationary/movable member section 12/13 where the stacks of sheet portions define at least one recess 45 in the air-gap surface 14. The recess 45 is surrounded by protrusions 46. The recess 45 can be used as a part of e.g. a fluid bearing arrangement, provided in direct connection with the air-gap.

Since the manufacturing is based on sheet material, both plane and curved items can be manufactured. In many cases, sections of annular discs are used as stationary/movable member sections. In order to manufacture such a structure with a cavity provided straight through the final item, the length of the sheet portions and the cut-out area distribution will differ depending on where in the stack the sheet portion is to be placed. The different sheet portions must therefore be shaped individually.

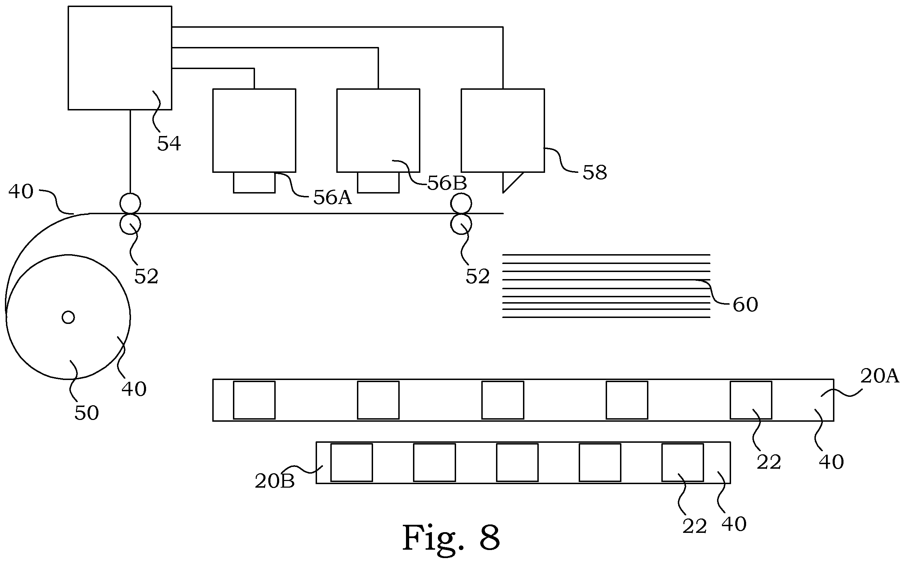

Figure 8 illustrates one embodiment of a manufacturing equipment for producing sheet portions of varying size and shapes. Sheet material of highly magnetically permeable material 40 is preferably provided in a roll 50. A feeding arrangement 52 is controlled by a controller 54 to advance the sheet material a requested distance at a time. A first punching equipment 56A is arranged for punching the sheet material at a predetermined location and with a predetermined punch tool. If several different shapes are to be punched into the sheet material, additional punching equipment 56B may be provided. The punching equipment 56A, 56B are controlled by the controller 54 such that the feeding arrangement positions a correct part of the sheet material at the punching location before the punching equipment 56A, 56B is activated. In such way, cut-out area distances can be varied in the sheet material, while only using a single punching tool. When the correct set of cut-out areas are provided in the sheet material, the end of the intended sheet portion is placed at a cutting position, where a separating tool 58 separates the sheet portion to achieve the requested size. The flat, but typically flexible sheet portions may be collected in a pile 60. The cutting tool is also controlled in cooperation with the controller 54 so that the feeding arrangement 52 will be able to position the sheet material correctly.

Due to the possibility to control the feeding of the sheet material individually for each sheet portion, the distribution of cut-out areas and the total length can be adapted. In the bottom of Figure 8, two examples of sheet portions 20A, 20B are illustrated. The upper one 20A is intended to constitute a radially outer part of a curved section. The lower one 20B is intended to constitute a radially inner part of the curved section.

In the embodiment described above, punching is used for creating cut-out areas as well as for separating the sheet portions. However, there are several other feasible approaches. Water cutting and laser cutting are today commonly used for providing different types of shaped sheet material. Such techniques are also easily individually controllable and may easily be adapted for creating the cut-out areas. Similarly, also the separating action can be implemented by other techniques, such as e.g. water cutting and laser cutting.

In other words, in one embodiment, the creating of cut-out areas is performed by punching, water cutting and/or laser cutting. In one embodiment, the separating of the sheet of highly magnetically permeable material into sheet portions is performed by mechanical cutting, punching, water cutting and/or laser cutting.

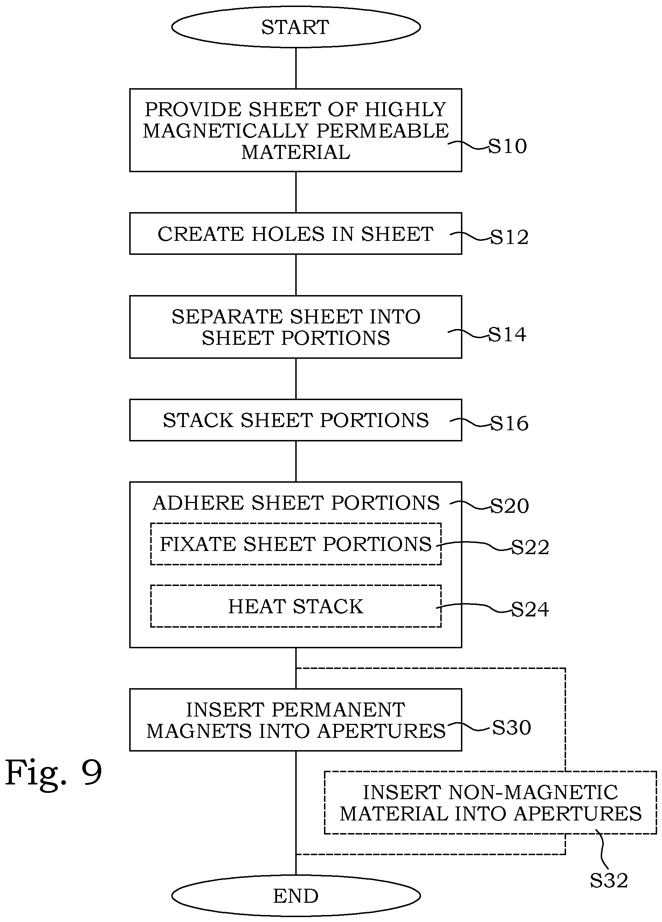

Figure 9 is a flow diagram of steps of an embodiment of a method for manufacturing a movable member and/or a stationary member of an electrical machine. In step S 10, a sheet of a highly magnetically permeable material is provided. In step S12, cut-out areas are created in the sheet of the highly magnetically permeable material. In step S14, the sheet of the highly magnetically permeable material is cut into sheet portions. In step S16, the sheet portions are stacked in a direction perpendicular to a main sheet extension of respective sheet portions. Thereby, a stack of sheet portions is formed. The step S16 of stacking also comprises adapting of a relative lateral position of the sheet portions for aligning the cut-out areas of the respective sheet portions for forming cavities extending transverse to the main sheet extension.

In step S20, the sheet portions are adhered to each other. Thereby, a movable member or a stationary member of an electrical machine is formed. The edges of the sheet portions together form a side air-gap surface that is parallel to a normal of the main sheet extension. The stacks of sheets of highly magnetically permeable material form a bridging section of the highly magnetically permeable material passing the cavities in a direction of a predetermined motion path.

In one embodiment, the highly magnetically permeable material has an adhesive coating. The step S20 of adhering in turn comprises the part step S22 of fixating the stack of sheet portions and the part step S24 of heating the stack of sheet portions. This causes a cross-linking between the adhesive coating of neighbouring sheet portions in the stack of sheet portions.

In one embodiment, the cavities are apertures extending transverse to the main sheet extension. The bridging section of the highly magnetically permeable material separates the aperture and the respective side air-gap surface. In this embodiment, in step S30, permanent magnets are inserted into the apertures.

In an alternative embodiment, the cavities form recesses in the side air-gap surface transverse to the main sheet extension. The bridging section is positioned at a non-zero distance from the side air-gap surface. In this embodiment, in step S32, non-magnetic material is inserted into the recesses.

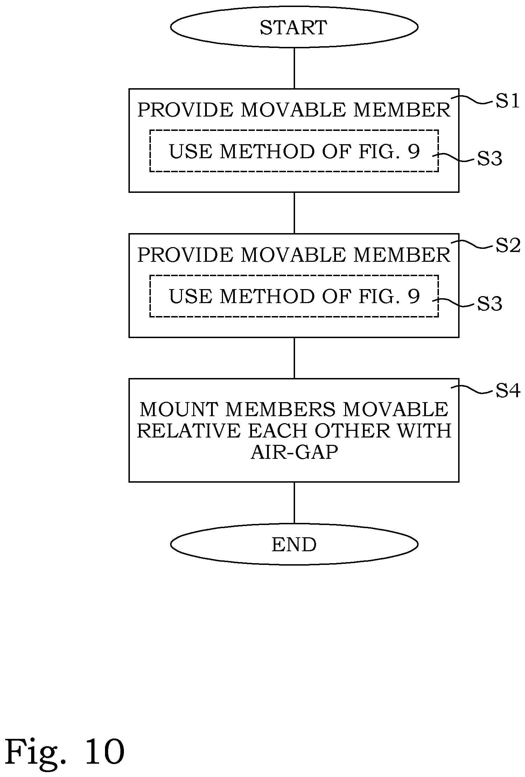

Figure 10 is a flow diagram of steps of an embodiment of a method for manufacturing an electrical machine. In step S1, a movable member is provided. In step S2, a stationary member is provided. At least one of the steps S1 and S2 comprises the part step S3 in which the providing is performed according to the method of Figure 7.

In step S4, the movable member is mounted movable relative to the stationary member along a predetermined motion path parallel to the side air-gap surfaces of stationary member and movable member. The predetermined motion path is rotational or linear. The side air-gap surface of the movable member and the side air-gap surface of the stationary member are separated by an air-gap.

If the movable member has a plurality of movable member sections and the stationary member has a plurality of stationary member sections, the step S4 of mounting comprises mounting the movable member relative to the stationary member by interleaving the stationary member sections and the movable member sections in a direction perpendicular to side air-gap surfaces with a respective air-gap between pairs of the side air-gap surfaces of the movable member sections and the side air-gap surfaces of the stationary member sections.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1. An electrical machine (1), being a machine operating by switching of magnetic flux (5), comprising:
- a stationary member (10) having at least one side air-gap surface (14);
wherein said stationary member (10) has at least one stationary member section (12); and
- a movable member (11) having at least one side air-gap surface (14);
wherein said movable member (11) has at least one movable member section (13);
wherein said movable member (11) is movable relative to said stationary member (10) along a predetermined motion path (P), rotational or linear, parallel to said side air-gap surfaces (14) of stationary member (10) and movable member (11);
wherein said side air-gap surface (14) of said movable member (11) and said side air-gap surface (14) of said stationary member (10) being separated by an air-gap (15);
wherein at least one of said movable member (11) and said stationary member (10) comprises stacks (21) of sheet portions (20) of highly magnetically permeable material (40);
wherein each of said sheet portions (21) of highly magnetically permeable material (40) has a main sheet extension with a normal (N) that is parallel to respective said side air-gap surface (14) and is transverse to a direction of said predetermined motion path (P); and
wherein each of said sheet portions (20) have cut-out areas (22), wherein said cut-out areas (22) in said stacks (21) of sheet portions (20) of highly magnetically permeable material (40) together form cavities (24) extending transverse to said main sheet extension, forming a bridging section (23) of said highly magnetically permeable material (40) passing said cavities (24) in said direction of said predetermined motion path (P).

2. The electrical machine according to claim 1, **characterized in that**
said cavities (24) are apertures (25) extending transverse to said main sheet extension, wherein said bridging section (23) of said highly magnetically permeable material (40) separates said aperture (25) and respective said side air-gap surface (14);
wherein said electrical machine (1) further comprises permanent magnets (30) inserted into said apertures (25), whereby said electrical machine (1) is a modulated pole machine.

3. The electrical machine according to claim 2, **characterized in that** said permanent magnets (30) are electrically insulated with respect to said stacks (21) of sheet portions (20) of said highly magnetically permeable material (40).

4. The electrical machine according to claim 1, **characterized in that**
said cavities (24) form recesses (26) in said side air-gap surface (14) transverse to said main sheet extension, wherein said bridging section (23) is positioned at a non-zero distance from said side air-gap surface (14), whereby said electrical machine (1) is a switched reluctance machine.

5. The electrical machine according to claim 4, **characterized by** having non-magnetic material inserted into said recesses (26).

6. The electrical machine according to any of the claims 1 to 5, **characterized in that** said bridging section (23) has a width (W) measured perpendicular to respective said side air-gap surface (14) that is less than 1/10, preferably less than 1/20, of an extension (D; D1,D2) of said cavities (22) perpendicular to respective said side air-gap surface (14).

7. The electrical machine according to any of the claims 1 to 6, **characterized in that** said sheet portions (20) of highly magnetically permeable material (40) in said stacks (21) of sheet portions (20) of highly magnetically permeable material (40) are attached to each other by adhesive material (41).

8. The electrical machine according to any of the claims 1 to 7, **characterized in that** said movable member (11) has a plurality of movable member sections (13) and said stationary member (10) has a plurality of stationary member sections (12), wherein said plurality of stationary member sections (12) and said plurality of movable member sections (13) are interleaved in a direction perpendicular to side air-gap surfaces (14) with a respective air-gap (15) between pairs of said side air-gap surfaces (14) of said movable member sections (13) and said side air-gap surfaces (14) of said stationary member sections (12).

9. The electrical machine according to claim 8, **characterized in that** at least one of said plurality of stationary member sections (12) and said plurality of movable member sections (13) is a disc having air-gaps (15) on both sides, wherein both sides are facing a respective one of said plurality of movable member sections (13) and said plurality of stationary member sections (12), respectively.

10. The electrical machine according to any of the claims 1 to 9, **characterized in that** said highly magnetically permeable material (40) being defined as materials having a relative magnetic permeability of more than 50 at a magnetic flux density of more than 0.2 Tesla.

11. The electrical machine according to any of the claims 1 to 10, **characterized in that** said stacks (21) of sheet portions (20) of said at least one of said movable member (11) and said stationary member (10) comprising stacks (21) of sheet portions (20) defining at least one recess (45) in said air-gap surface (14), wherein said at least one recess (45) is used as a part of a fluid bearing arrangement.

12. A method for manufacturing at least one of a movable member (11) and a stationary member (10) of an electrical machine (1), comprising the steps of:
- providing (S10) a sheet of a highly magnetically permeable material (40);
- creating (S12) cut-out areas (22) in said sheet of said highly magnetically permeable material (40);
- separating (S14) said sheet of said highly magnetically permeable material (40) into sheet portions (20);
- stacking (S16) said sheet portions (20) in a direction perpendicular to a main sheet extension of respective sheet portions (20), forming a stack (21) of sheet portions (20);
wherein said step of stacking (S16) comprises adapting a relative lateral position of said sheet portions (20) for aligning said cut-out areas (22) of respective said sheet portions (20) for forming cavities (24) extending transverse to said main sheet extension; and
- adhering (S20) said sheet portions (20) to each other, thereby forming said at least one of a movable member (11) and a stationary member (10) of an electrical machine (1), whereby edges of said sheet portions (20) together form a side air-gap surface (14) that is parallel to a normal (N) of said main sheet extension;
wherein said stacks (21) of sheet portions (20) of highly magnetically permeable material (40) forming a bridging section (23) of said highly magnetically permeable material (40) passing said cavities (24) in a direction of a predetermined motion path (P).

13. The method according to claim 12, **characterized in that** said highly magnetically permeable material (40) has an adhesive coating (41), whereby said step of adhering (S20) in turn comprises the part steps of:
- fixating (S22) said stack (21) of sheet portions (20); and
- heating (S24) said stack (21) of sheet portions (20), causing a cross-linking between said adhesive coating (41) of neighbouring sheet portions (20) in said stack (21) of sheet portions (20).

14. A method for manufacturing an electrical machine (1), comprising the steps of:
- providing (S1) a movable member (11);
- providing (S2) a stationary member (10);
wherein at least one of said steps (S1, S2) of providing a movable member (11) and providing a stationary member (10) is performed (S3) according to any of the claims 11 to 16;
- mounting (S4) said movable member (11) movable relative to said stationary member (10) along a predetermined motion path (P), rotational or linear, parallel to said side air-gap surfaces (14) of stationary member (10) and movable member (11);
wherein said side air-gap surface (14) of said movable member (11) and said side air-gap surface (14) of said stationary member (10) being separated by an air-gap (15).

15. The method according to 14, **characterized in that** said movable member (11) has a plurality of movable member sections (13) and said stationary member (10) has a plurality of stationary member sections (12), wherein said step of mounting (S4) comprises mounting said movable member (10) relative to said stationary member (11) by interleaving said stationary member sections (12) and said movable member sections (13) in a direction perpendicular to side air-gap surfaces (14) with a respective air-gap (15) between pairs of said side air-gap surfaces (14) of said movable member sections (13) and said side air-gap surfaces (14) of said stationary member sections (12).
